(19) Europäisches Patentamt
European Patent Office
Office européen des brevets

(11) EP 4 317 064 A1

(12) **EUROPEAN PATENT APPLICATION**
published in accordance with Art. 153(4) EPC

(43) Date of publication:
**07.02.2024 Bulletin 2024/06**

(21) Application number: **22780723.7**

(22) Date of filing: **28.03.2022**

(51) International Patent Classification (IPC):
***C01B 33/00*** *(2006.01)* ***C01B 33/02*** *(2006.01)*
***H01M 4/36*** *(2006.01)* ***H01M 4/587*** *(2010.01)*
***H01M 4/62*** *(2006.01)*

(52) Cooperative Patent Classification (CPC):
**C01B 33/00; C01B 33/02; H01M 4/36; H01M 4/587; H01M 4/62;** Y02E 60/10

(86) International application number:
**PCT/JP2022/014922**

(87) International publication number:
**WO 2022/210512 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061478**

(71) Applicant: **Panasonic Intellectual Property Management Co., Ltd.**
**Kadoma-shi, Osaka 571-0057 (JP)**

(72) Inventors:
- **BADAR, Saifullah**
  **Kadoma-shi, Osaka 571-0057 (JP)**
- **SAKATA, Motohiro**
  **Kadoma-shi, Osaka 571-0057 (JP)**

(74) Representative: **Novagraaf International SA**
**Chemin de l'Echo 3**
**1213 Onex, Geneva (CH)**

# (54) NEGATIVE ELECTRODE ACTIVE MATERIAL FOR SECONDARY BATTERIES AND METHOD FOR PRODUCING SAME

(57) A negative electrode active material for a secondary battery includes a composite material including an active phase that reacts with Li and an amorphous material phase, wherein the active phase is dispersed in the amorphous material phase, and the amorphous material phase includes Si, O, and C.

*FIG. 2*

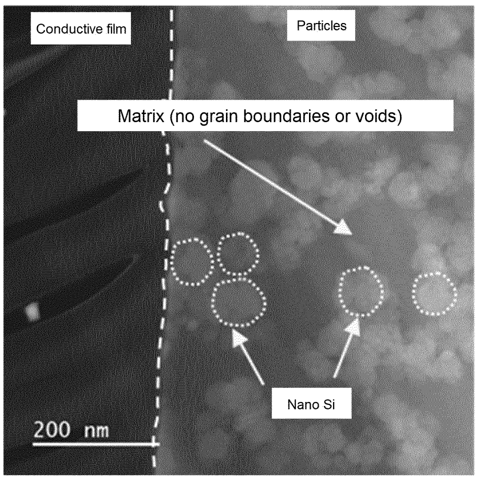




Processed by Luminess, 75001 PARIS (FR)

## Description

[Technical Field]

The present invention relates to a negative electrode active material for a secondary battery, and a production method therefor.

[Background Art]

Nonaqueous electrolyte secondary batteries, particularly lithium ion secondary batteries, are expected as a power source for small consumer applications, power storage devices, and electric vehicles, because of their high voltage and high energy density. With a demand for a high energy density in batteries, as a negative electrode active material having a high theoretical capacity density, use of a material containing silicon (Si) capable of being alloyed with lithium is expected.

Patent Literature 1 proposes a negative electrode active material for a lithium secondary battery of a composite or a mixture of carbon-metal, including a carbon-based active material including a first ceramic coating layer, and a metal-based active material, or a metal-based active material including a first ceramic coating layer and a carbon-based active material. The metal-based active material is a metal selected from silicon, tin, aluminum, vanadium, magnesium, antimony, or an alloy of a combination of one or more of these; a compound selected from the group consisting of an oxide, a nitrate, or a carbide of the metal; or a combination of these.

Patent Literature 2 proposes a method for producing a porous amorphous material: in the method, a porous resin is immersed in one, or two or more organic silicon compound selected from crosslinkable silane and siloxane; in the porous resin, a crosslinked product of the above-described organic silicon compound is formed; and then it is heated at a temperature of 650 to 1350°C in a non-oxidizing gas and allowed to react to produce an amorphous material including silicon, carbon, and oxygen as constituent elements and having oxidation resistance.

Patent Literature 3 proposes a lithium secondary battery including a positive electrode, a negative electrode, a nonaqueous electrolyte, and a separator, wherein the positive electrode has a positive electrode mixture layer containing a lithium-containing composite oxide as a positive electrode active material on one or both surfaces of a current collector; the negative electrode has a negative electrode mixture layer containing a composite of a material including Si and O as constituent elements (where atomic ratio x of O to Si is $0.5 \leq x \leq 1.5$) and a carbon material, and a graphite carbon material as a negative electrode active material on one or both surfaces of the current collector; the ratio P/N of a mass P of the positive electrode active material to a mass N of the negative electrode active material is 1.0 to 3.6; and the nonaqueous electrolyte contains 1 to 10 mass% of halogen-substituted cyclic carbonate and 1 to 10 mass% of vinylene carbonate.

[Citation List]

[Patent Literature]

PLT1: Japanese Laid-Open Patent Publication No.2015-18788
PLT2: Japanese Laid-Open Patent Publication No.2007-115548
PLT 3: Japanese Laid-Open Patent Publication No.2011-233245

[Summary of Invention]

[Solution to Problem]

The metal-based active material including the first ceramic coating layer of Patent Literature 1 goes through significant expansion and contraction during charging and discharging, and probably is difficult to achieve practical use. The porous amorphous material obtained by the production method of Patent Literature 2 has a low capacity and is difficult to achieve a sufficiently high capacity. The material including Si and O as constituent elements of Patent Literature 3 has a large irreversible capacity, and is difficult to control the capacity.

Meanwhile, a material in which silicon is dispersed in lithium silicate and sintered has been examined. However, the electrolyte goes into the grain boundary produced by sintering, and side reactions that involve decomposition of the electrolyte progresses, and the materials deteriorate.

[Solution to Problem]

In view of the above, an aspect of the present disclosure relates to a negative electrode active material for a secondary battery including a composite material including an active phase that reacts with Li and an amorphous material phase, wherein the active phase is dispersed in the amorphous material phase, and the amorphous material phase includes Si, O, and C.

Another aspect of the present invention relates to a method for producing a negative electrode active material for a secondary battery, the method including: producing a mixture including a first polymer of an organic silicon polymer including Si, O, and C, a material composing an active phase that reacts with Li, and baking the mixture to produce a composite material including the active phase and an amorphous material phase including Si, O, and C, wherein the active phase is dispersed in the amorphous material phase.

Still another aspect of the present invention relates to a secondary battery including a positive electrode, a negative electrode, a separator interposed between the positive electrode and the negative electrode, and an electrolyte, wherein the negative electrode includes the above-described negative electrode active material for a secondary battery.

[Effects of Invention]

A negative electrode active material for a secondary battery with a high capacity and does not easily deteriorate can be provided.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1A] FIG. 1A is a partially cutaway plan view schematically showing a structure of a secondary battery in an embodiment.

[FIG. 1B] FIG. 1B is a cross sectional view along line X-X' of the secondary battery shown in FIG. 1A.

[FIG. 2] FIG. 2 is a cross sectional TEM image of a composite material of an embodiment of the present disclosure.

[FIG. 3] FIG. 3 is a diagram showing a TEM-EELS spectrum of the composite material shown in FIG. 2.

[FIG. 4] FIG. 4 is a diagram showing a C1s spectrum in XPS analysis on the composite material shown in FIG. 2.

[Description of Embodiments]

In the following, embodiments of the present disclosure will be described in detail with reference to examples. The present disclosure, however, is not limited to the following examples. In the following description, specific numerical values and materials may be exemplified, but other numerical values and other materials may be used as long as the effect of the present disclosure is obtained. For the elements other than characteristic portions of the present disclosure, configurations of known secondary batteries and their negative electrodes can be used. In this specification, a "range of numeral value A to numeral value B" means that the range includes the numeral value A and the numeral value B. When a plurality of materials are exemplified, a kind may be selected from these and used singly, or two or more can be used in combination.

A negative electrode active material for a secondary battery in an embodiment of the present disclosure includes a composite material including an active phase and an amorphous material phase. The form of the composite material is not particularly limited, and it may be provided as a bulk state, or a powder or the like including a plurality of particles.

<Composite material>

The active phase is formed of a material that exhibits a capacity by a Faradaic reaction with lithium (Li). The active phase is dispersed in the amorphous material phase. The active phase repeats expansion and contraction by charging and discharging, involving considerable volume changes. In other words, the active phase is a material that expands more than the amorphous material phase when the negative electrode active material stores lithium. The active phase may include a metal element capable of being alloyed with lithium.

The amorphous material phase is composed of a material with a smaller capacity per unit mass (mAh/g) exhibitable than that of the active phase. The amorphous material phase goes through a small volume change by charging and discharging, or does not go through volume change. The amorphous material phase relieves stress from the expansion and contraction of the active phase, and suppresses side reactions between the active phase and the electrolyte.

The composite material may have a sea-island structure. In the sea-island structure, the active phase forms an island portion, and the amorphous material phase forms a continuous sea portion or a matrix. When the composite material is powder, in any one of the composite material particles, a plurality of island portions are dispersed in the sea portion. In some island portions, at least a portion of the surface of the island portion may be exposed without being covered with the sea portion. In view of improving effects of relieving the stress and suppressing side reactions with the electrolyte, for example, 80% or more of the island portion is preferably embedded in the sea portion based on its number. Preferably, 80% or more of the surface of the island portion embedded in the sea portion is covered with the sea portion, or may be completely covered with the sea portion. The ratio of the island portion embedded in the sea portion based on its number can be determined from a cross sectional TEM image of the composite material with a field of 1 $\mu m^2$ or more.

The amorphous material phase includes Si (silicon), O (oxygen), and C (carbon). The amorphous material phase forms a compound in which Si, O, and C are bonded randomly with a covalent bond. The amorphous material phase has, for example, a Si-O-C bond (covalent bond). That is, the amorphous material phase is not a simple mixture or a simple composite of a plurality of types of compounds (SiO, SiC, etc.). The amorphous material phase is a phase whose crystal structure is not specified. The amorphous material phase may form a single phase without having an interface between different materials, which may be seen in a composite of two or more types of materials. With the amorphous material phase including Si, O, and C as essential components and being a phase whose crystal structure is not specified, the hardness of the composite material increases, and the composite material also has elasticity or flexibility that relieves the stress from expansion and contraction of the active phase.

In the cross section of the composite material, preferably, the amorphous material phase does not have a substantial grain boundary. With the amorphous material phase being a continuous structure substantially not having the grain boundary, the hardness of the composite material increases even more, the phenomenon of the electrolyte going into the grain boundary decreases, side reactions involving decomposition of the electrolyte are suppressed, and the material does not easily deteriorate. In this case, the composite material may be formed as primary particles. However, the amorphous material phase may have a grain boundary in a small amount. The amorphous material phase substantially not having a grain boundary can be confirmed with cross sectional TEM images of the composite material. In a cross sectional TEM image of the composite material with a field of 500 $nm^2$, when the length of the grain boundary in the amorphous material phase in total is 1 nm or less, the amorphous material phase can be regarded as substantially not having a grain boundary. Preferably, the measurement is performed with random ten composite particles in the same manner, and the measured value is averaged to determine the length of the grain boundary.

When the amorphous material phase is represented by a general formula (1): $Li_aSiO_xN_yC_z$, the general formula (1) satisfies, for example, $0 \leq a \leq 2$, $0.1 \leq x \leq 1.5$, $0 \leq y \leq 0.5$, and $0 < 1-0.5x-0.75y < z \leq 6$. Such a composition is a composition determined experimentally based on compositions of the amorphous material phase produced by the production method described later. Li may be trapped as an irreversible capacity during charging and discharging. Lithium may also be pre-doped. In this case, the range of "a" may satisfy $0.1 \leq a \leq 2$.

In the general formula (1), the range of "z" representing the atomic ratio of C to Si may be $0.1 \leq z \leq 6$, $0.5 \leq z \leq 4$, or $0.5 \leq z \leq 3$. By controlling the amount of carbon included in the amorphous material phase within the above-described range, the Si-O-Li bond is hardly formed, the irreversible capacity of the composite material is decreased, and the amorphous material phase itself has a capacity, which is advantageous for increasing the capacity.

Determination of the composition of the amorphous material phase (quantification of each element in the composite material) can be performed by transmission electron microscope (TEM)-energy-dispersive X-ray (EDX) spectroscopy. In TEM-EDX analysis, cross sections of the composite material are observed with TEM, and element mapping analysis is performed with EDX. Preferably, the observation magnification is 2000 to 20000. Preferably, the mapping analysis is performed for a region inner from the peripheral edge of the cross-section of the composite material particles by 1 $\mu$m or more. In the mapping analysis, using an image analysis software, the element content (i.e., composition) can be calculated. Random ten particles may be measured in the same manner, and the measured values can be averaged to determine the composition. The maximum diameter of the particles to be measured is preferably 5 $\mu$m or more. The cross sections of the composite material particles can be formed, for example, by filling the composite material into a thermosetting resin and curing, and then processing it using a cross-section polisher (CP), or by disassembling the battery and taking out the negative electrode, and immersing the negative electrode in a thermosetting resin and curing.

Preferable cross sectional TEM-EDX analysis conditions are shown below.

Processing Equipment: SM-09010 (Cross Section Polisher) manufactured by JEOL
Processing conditions: Acceleration voltage 6kV
Current value: 140 $\mu$A
Vacuum degree: $1 \times 10^{-3}$ to $2 \times 10^{-3}$ Pa
Measurement device: JEOL JEM-F200
Acceleration voltage at analysis: 200 kV

In a C1s spectrum obtained by X-ray photoelectron spectroscopy (XPS) of the composite material, a plurality of types of C1s peaks based on the amorphous material phase are observed. For example, C1s peaks attributed to a Si-C bond, a Si-O-C bond, a C-O bond, and a C-C bond are observed. Presence of such peaks shows that the amorphous material phase includes a region other than oxides of not small amount. Particularly, the C1s peak attributed to the C-C bond is a peak characteristic to the composite material of the present disclosure, and shows that the amorphous material phase includes a region composed of carbon. The peak attributed to the C-C bond is observed, for example, near 284.8eV.

The ratio of a peak area attributed to the C-C bond Sx relative to a total area of all C1s peaks St is, for example, 2% or more, or may be 3% or more, or 5% or more. The ratio of Sx relative to St is, for example, 90% or less, or may be 70% or less, or 20% or less. The ratio of Sx relative to St may be 2% or more and 90% or less, or 2% or more and 20% or less.

The ratio of a total of a peak area attributed to a C-Si bond Sy and a peak area attributed to a C-O-Si bond Sz relative to the total area St may be 50% or more, 60% or more, or 70% or more.

In XPS of the composite material, using a powder of the composite material as a sample, analysis is performed along the depth direction of the composite material from the sample surface (10 to 100 nm) to analyze inside the composite material.

In the following, preferable XPS measurement conditions are shown.

Measurement device: PHI5000 manufactured by ULVAC-PHI, Inc.
X-ray used: monochromatic Al-K$\alpha$, 25W, 15kV
Degree of vacuum: $5 \times 10^{-7}$Pa

In a 13CNMR measurement on the composite material as well, a peak attributed to a C-C bond that is characteristic to the composite material of the present disclosure is observed. A peak area Sv of 9 ppm or more and 30 ppm or less in a spectrum obtained in a 13C-NMR measurement on the composite material may be, for example, 10% or more and 90% or less of the area of the entire spectrum.

In the following, preferable 13CNMR measurement conditions are shown.

Measurement device: JNM-ECZ-600
Magnetic field intensity: 14.1T
MAS-number of revolution: 15kHz

As described above, with the present disclosure, a composite material in which the amorphous material phase does not have a substantial grain boundary, whose hardness is high, and does not easily deteriorate can be obtained. The hardness of the composite material particles can be evaluated by fracture strength of the particles of the composite material. The fracture strength of the particles is, for example, 600 MPa or less when the particle size (maximum diameter) is 6 um, and for example, 500 MPa or less when the particle size (maximum diameter) is 12 um. In this case, the particles are not easily ground during electrode plate production processes and charge and discharge cycles, which is advantageous in suppressing decrease in cycle characteristics. However, preferably, the fracture strength is, for example, 100 MPa or more when the particle size (maximum diameter) is 6 um, and for example, 50 MPa or more when the particle size (maximum diameter) is 12 um. The fracture strength can be determined as an average value of five particles.

For the particles for the fracture strength measurement, particles having a particle size (maximum diameter) of a predetermined particle size (6 $\mu$m or 12 $\mu$m) and a circularity of 75% or more in the obtained captured images are prepared. The particles are compressed with an indenter while gradually increasing the load. The load when particles are fractured is regarded as the fracture strength of the particles. The fracture strength can be measured using a micro compression testing machine MCT-211 manufactured by SHIMADZU CORPORATION. For example, using a flat indenter with a distal end diameter of 50 $\mu$m, and setting the displacement velocity to 5 $\mu$m/sec, the fracture strengths of five particles are measured and the average value is determined. When there is no clear fracture point, the fracture strength is calculated from the test force when the compression rate is 20%.

The active phase may be composed of a material that is capable of electrochemically and reversibly react with Li. For such a material, for example, at least one selected from the group consisting of metal and an intermetallic compound may be included. The material composing the active phase may be a silicon compound such as silicon carbide, and a composite oxide such as a lithium-titanium composite oxide. A kind of active phase may be used singly, or two or more kinds thereof may be used in combination.

When metal is used for the material composing the active phase, the metal may be at least one selected from the group consisting of Si, Sn, Ti, Al, and Mg. Preferably, in particular, Si and Sn have a high capacity, and particularly, Si is preferable because of its low cost.

When an intermetallic compound is used as the material composing the active phase, the intermetallic compound

may be at least one selected from the group consisting of $CrSi_2$, $MnSi_2$, $FeSi_2$, $CoSi_2$, $NiSi_2$, and LiNiSn.

The mass ratio of the active phase in the composite material can be suitably controlled. The mass ratio of the active phase in the composite material is preferably high as much as possible in view of producing a high capacity active material. Meanwhile, in view of relieving the stress from expansion and contraction of the active phase, and suppressing side reactions of the active phase and the electrolyte, the composite material has to include a certain amount of amorphous material phase. The mass ratio of the active phase in the composite material may be, for example, 20 mass% or more and 95 mass% or less, or 35 mass% or more and 75 mass% or less.

When the active phase is silicon, the Si phase content of the composite material can be measured with Si-NMR.

When the active phase is particulate, the active phase may have an average particle size of 1 nm or more and 1000 nm or less. The "particulate" means a state where the active phase (or the island portion) each has a particle form. The shape of the particle is not particularly limited, and the ratio: A/B of the maximum diameter A of the particles to the maximum width B in the direction perpendicular to the maximum diameter may be, for example, 1 or more and 20 or less, 1 or more and 10 or less, 1 or more and 5 or less, or 1 or more and 3 or less. The A/B may be determined as an average value of random ten particles of the active phase (or the island portion). The smaller the average particle size of the active phase is, the easier the stress from expansion and contraction of the active phase can be relieved, and deterioration by cracking of the active phase itself can be suppressed. Meanwhile, the larger the average particle size of the active phase is, the easier the side reactions of the active phase and the electrolyte can be suppressed. The active phase may have an average particle size of 200 nm or less, 100 nm or less, or 50 nm or less.

The average particle size of the active phase is measured by using cross sectional images of the composite material produced by TEM or SEM. The average particle size of the active phase is determined by averaging the maximum diameter of random 100 active phases.

<Negative electrode active material>

The negative electrode active material may include, in addition to the composite material, at least one carbon material selected from the group consisting of natural graphite, artificial graphite, hard carbon, and soft carbon. The carbon material may be formed into a composite with the amorphous material phase. For example, in the composite material of a carbon material and an amorphous material phase, an active phase may be dispersed.

The carbon material goes through less degree of expansion and contraction during charging and discharging compared with the active phase, and therefore by using the carbon material in combination with the composite material, cycle characteristics of the battery can be easily improved. The carbon material content of the negative electrode active material may be, for example, 70 mass% or more and 99 mass% or less, 85 mass% or more and 95 mass% or less, or 90 mass% or more and 95 mass% or less. In this manner, a high capacity and more excellent cycle characteristics can be both easily achieved.

<Production method for negative electrode active material including composite material>

The composite material included in the negative electrode active material for a secondary battery can be produced by, for example, the following production method (hereinafter, referred to as "production method A"). The production method A includes a first step and a second step.

(i) First step

The first step is a step in which a mixture including a first polymer and a material composing an active phase that reacts with Li is produced. The first polymer is a raw material of an amorphous material phase including Si, O, and C, and includes Si, O, and C. The first polymer may be an organic silicon polymer.

The organic silicon polymer is also called a ceramic precursor polymer, and may form ceramics by controlling baking conditions. The organic silicon polymer is generally soluble in an organic solvent and is easily handled. Many of the organic silicon polymers are thermoplastic, and become liquid when heated in the second step that follows. The organic silicon polymer may be a liquid polymer under room temperature (25°C to 35°C). By using a first polymer that is liquid under room temperature or when heated, an amorphous material phase substantially not having a grain boundary can be produced, and a composite material having particles with a high fracture strength can be produced.

For the first polymer, for example, polysiloxane, polycarbosilane, polysilazane, a silicone resin, a silicone oil, polyorganoborosilazane, polymetalloxane, polyborosiloxane, and polycarbosilazane may be used. These may be used singly, or two or more kinds may be used in combination. For example, at least one selected from the group consisting of polysiloxane, polycarbosilane, polysilazane, a silicone resin, and a silicone oil may be used. Some examples for the structure of the repeating unit of the first polymer are shown in formulas (2) to (4) below.

Formula (2):

[Chem 1]

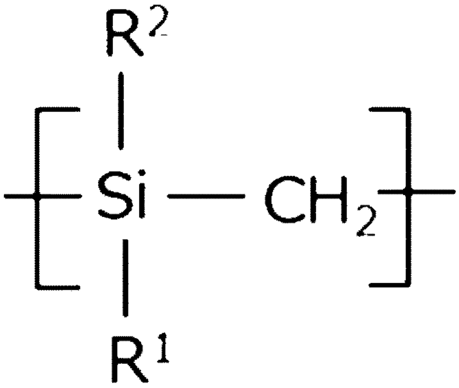

The first polymer shown by Formula (2): is called polycarbosilane. Formula (3):

[Chem 2]

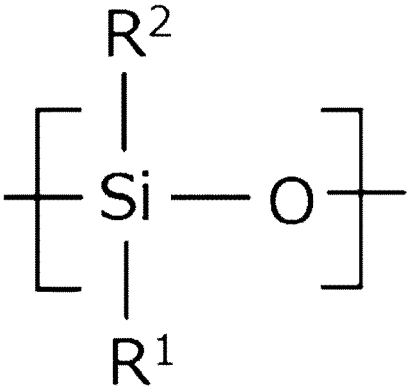

The first polymer shown by Formula (3): is called polysiloxane. Formula (4):

[Chem 3]

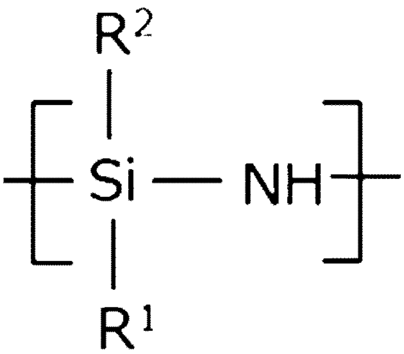

The first polymer shown by Formula (4): is called polysilazane. These examples of the first polymer may produce an amorphous material phase represented by the general formula (1).

In the formulas (2) to (4), R1 and R2 are each independently, for example, a hydrogen atom or an organic group with 1 to 8 carbon atoms. The organic group includes a hydrocarbon group having a substituent (or a functional group) and a hydrocarbon group not having a substituent (or a functional group) . The functional group may be a hydroxyl group, a cyano group, and an amino group, but not limited thereto. The hydrocarbon group may be, for example, an alkyl group, a vinyl group, an alkoxy group, an aryl group, an aryloxy group, a ketone group, a carboxyl group, and an

ester group. The plurality of repeating units of the first polymer may be the same structure, or different structures. That is, in the plurality of repeating units of the first polymer, R1 and R2 may be the same or different.

Examples of the alkyl group include a methyl group, an ethyl group, a propyl group, an isopropyl group, a butyl group, a t-butyl group, a pentyl group, and a hexyl group. Examples of the aryl group include a phenyl group, a benzyl group, and a toluyl group. Examples of the aryloxy group include a phenoxy group. Examples of the alkoxy group include an oxyalkyl group with 1 to 8 carbon atoms. Examples of the ester group include a condensation group of an alcohol with 1 to 8 carbon atoms and a carboxylic acid with 1 to 8 carbon atoms. For example, R1 and R2 may be each independently a phenyl group, a methyl group, and an ethyl group.

The first polymer may have a weight-average molecular weight (Mw) of, for example, 1000 or more and 100000 or less, 1000 or more and 10000 or less, or 2000 or more and 10000 or less.

Examples of the material composing the active phase include particles of the above described materials (hereinafter, also referred to as "active particles"). The active particles may be nanoparticles. The average particle size of the active particles may be 1 nm or more and 1000 nm or less, 200 nm or less, 100 nm or less, or 50 nm or less. For the active particles, for example, silicon nanoparticles may be used.

The average particle size of the active particles is measured by using cross sectional images of the composite material produced by TEM or SEM. The average particle size of the active particles is determined by averaging the maximum diameter of random 100 active particles.

In the mixture, the amount of the material composing the active phase relative to 100 parts by mass of the first polymer may be suitably set in accordance with the desired ratio of the active phase of the composite material, but for example, it can be 20 parts by mass or more and 250 parts by mass or less, or 50 parts by mass or more and 200 parts by mass or less.

(ii) Second step

The second step is a step in which the mixture is baked to produce a composite material including an active phase and an amorphous material phase including Si, O, and C, wherein the active phase is dispersed in a matrix of the amorphous material phase. The mixture including the first polymer and the material composing the active phase is in a slurry form having flowability under room temperature, or goes through a state having flowability at least when heating for baking. That is, the majority of the surface of the material composing the active phase is covered with the first polymer having flowability. Using the mixture under such a state is preferable in terms of producing a dense composite material.

The baking of the mixture may be performed at, for example, 600°C or more and 1000°C or less in an inert atmosphere. The inert atmosphere may be a reduced-pressure atmosphere, and may be under a flow of inert gas. For the inert gas, argon, nitrogen, helium, and the like may be used. The baking time may be a duration for the carbon atoms included in the first polymer to be sufficiently carbonized. The composite material produced after baking is a solid having no flowability. By grinding the composite material, a composite material in a powder state is produced.

In the step of producing the mixture, a second polymer that should be carbonized along with the carbon atoms in the first polymer can be mixed in the mixture when baking the mixture. The second polymer may be included in the mixture as a raw material of at least one selected from the group consisting of natural graphite, artificial graphite, hard carbon, and soft carbon.

The second polymer is not particularly limited, but a material with excellent compatibility with the first polymer is preferable. The second polymer may be, for example, at least one selected from the group consisting of a polyvinyl resin, a polyimide resin, polyacrylonitrile, an acrylic resin, and a polyolefin resin.

[Negative Electrode]

In the following, the negative electrode is further described. The negative electrode has, for example, a sheet negative electrode current collector and a negative electrode mixture layer formed on the negative electrode current collector. The negative electrode active material is included in, for example, the negative electrode mixture layer. The negative electrode mixture layer is a negative electrode mixture formed into a layer or a film. The negative electrode mixture includes a negative electrode active material as an essential component, and includes a binder, a conductive assistant, a thickener, and the like as optional components.

The negative electrode active material layer can be formed, for example, by applying a negative electrode slurry in which a negative electrode mixture is dispersed in a dispersion medium, on a surface of the negative electrode current collector, and drying the slurry. The dried coating film may be rolled, if necessary.

For the negative electrode current collector, a non-porous conductive substrate (metal foil, etc.), and a porous conductive substrate (mesh-body, net-body, punched sheet, etc.) are used. For the material of the negative electrode current collector, stainless steel, nickel, a nickel alloy, copper, a copper alloy, and the like can be exemplified.

Examples of the binder include resin materials; fluorine resins such as polytetrafluoroethylene and polyvinylidene fluoride (PVDF); polyolefin resins such as polyethylene and polypropylene; polyamide resins such as aramid resin; polyimide resins such as polyimide and polyamide-imide; acrylic resins such as polyacrylic acid, polymethyl acrylate, and an ethylene-acrylic acid copolymer; vinyl resins such as polyacrylonitrile and polyvinyl acetate; polyvinylpyrrolidone; polyethersulfone; and rubber-type materials such as a styrene-butadiene copolymer rubber (SBR). These may be used singly or in combination of two or more.

For the conductive assistant, for example, carbon black such as acetylene black, carbon nanotube (hereinafter, also referred to as CNT), metal fiber, fluorinated carbon, metal powder, conductive whisker such as zinc oxide and potassium titanate, electrically conductive metal oxide such as titanium oxide, organic conductive material such as phenylene derivatives, and the like can be exemplified. These may be used singly or in combination of two or more.

An example of a secondary battery in which the negative electrode active material for a secondary battery of the present disclosure is used is described below. The secondary battery includes, for example, the above-described negative electrode, a positive electrode, and an electrolyte.

[Positive Electrode]

The positive electrode includes a positive electrode active material capable of electrochemically storing and releasing lithium ions. The positive electrode includes, for example, a positive electrode current collector, and a positive electrode mixture layer formed on the surface of the positive electrode current collector. The positive electrode active material layer can be formed, for example, by coating a positive electrode slurry in which a positive electrode mixture is dispersed in a dispersion medium, on a surface of the positive electrode current collector, and drying the slurry. The dried coating film may be rolled, if necessary. The positive electrode mixture includes a positive electrode active material as an essential component, and includes a binder, a conductive agent and the like as optional components.

For the positive electrode active material, for example, a lithium-containing composite oxide can be used. For example, $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMPO_4$, and $Li_2MPO_4F$ (M is at least one selected from the group consisting of Na, Mg, Sc, Y, Mn, Fe, Co, Ni, Cu, Zn, Al, Cr, Pb, Sb, and B) are used. Here, a = 0 to 1.2, b = 0 to 0.9, and c = 2.0 to 2.3 are satisfied. The value "a" representing the molar ratio of lithium increases and decreases by charging and discharging.

For the binder and the conductive agent, those exemplified for the negative electrode can be used. For the conductive agent, graphite such as natural graphite or artificial graphite may be used.

The shape and the thickness of the positive electrode current collector can be selected from the shapes and ranges according to the negative electrode current collector. Examples of the material of the positive electrode current collector may be stainless steel, aluminum, an aluminum alloy, and titanium.

[Electrolyte]

The electrolyte includes a solvent and an electrolytic salt. For the solvent, a nonaqueous solvent can be used, or water can be used. In the case of the lithium ion secondary battery, the electrolytic salt includes at least a lithium salt.

Preferably, the lithium salt concentration of the electrolyte is, for example 0.5 mol/L or more and 2 mol/L or less. By controlling the lithium salt concentration to be within the above-described range, an electrolyte with excellent ion conductivity and suitable viscosity can be produced. However, the lithium salt concentration is not limited to the above-described concentrations.

For the nonaqueous solvent, for example, cyclic carbonate, chain carbonate, cyclic carboxylate, chain carboxylate, and the like are used. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate, ethyl acetate, propyl acetate, methyl propionate, ethyl propionate, and propyl propionate. A kind of nonaqueous solvent may be used singly, or two or more kinds thereof may be used in combination.

Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, borates, and imide salts. A kind of lithium salt may be used singly, or two or more kinds thereof may be used in combination.

[Separator]

Usually, it is desirable to interpose a separator between the positive electrode and the negative electrode. The separator has ion permeability and insulating properties. The separator may be, for example, a microporous thin film, a woven fabric, or a nonwoven fabric. The separator material is preferably polyolefins such as polypropylene and polyethylene.

In an exemplary structure of the secondary battery, a positive electrode and a negative electrode are wound with a separator interposed therebetween to form an electrode group, and the electrode group and an electrolyte are accommodated in an outer case. The electrode group can be a laminate type, in which the positive electrode and the negative electrode are laminated with the separator interposed therebetween. The secondary battery may be, for example, cylindrical, prismatic, a coin type, a button type, or a sheet type.

In the following, with reference to FIG. 1A and FIG. 1B, a secondary battery in an embodiment of the present invention is described. FIG. 1A is a partially cutaway plan view schematically illustrating an example of a structure of a secondary battery. FIG. 1B is a cross sectional view along line X-X' of FIG. 1A.

As shown in FIG. 1A and FIG. 1B, a secondary battery 100 is a sheet type battery, and includes an electrode group 4, and an outer case 5 accommodating the electrode group 4.

The electrode group 4 has a structure in which a positive electrode 10, a separator 30, and a negative electrode 20 are laminated in this order, and the positive electrode 10 and the negative electrode 20 are facing each other with the separator 30 interposed therebetween. In this manner, the electrode group 4 is formed. The electrode group 4 is immersed in an electrolyte (not shown).

The positive electrode 10 includes a positive electrode mixture layer 1a and a positive electrode current collector 1b. The positive electrode mixture layer 1a is formed on a surface of the positive electrode current collector 1b.

The negative electrode 20 includes a negative electrode mixture layer 2a and a negative electrode current collector 2b. The negative electrode mixture layer 2a is formed on a surface of the negative electrode current collector 2b.

A positive electrode tab-lead 1c is connected to the positive electrode current collector 1b, and a negative electrode tab-lead 2c is connected to the negative electrode current collector 2b. The positive electrode tab-lead 1c and the negative electrode tab-lead 2c each extends to the outside of the outer case 5.

An insulating tab film 6 insulates the positive electrode tab-lead 1c from the outer case 5 and insulates the negative electrode tab-lead 2c from the outer case 5, respectively.

In the following, the present invention will be described in detail based on Examples and Comparative Examples, but the present invention is not limited to Examples below.

<Comparative Example 1>

An organic silicon polymer, polycarbosilane (R1 and R2 in formula (2) are -H and - $CH_2$-CH = $CH_2$ group, respectively, liquid under room temperature) was baked for 3 hours in a nitrogen atmosphere of 850°C until carbon atoms in the polycarbosilane were carbonized, thereby producing an amorphous material B1. The composition of the amorphous material B1 was measured with TEM-EDX, and it was determined to be $SiO_xN_yC_z$(x = 0.32, y = 0, z = 1.62).

<Comparative Example 2>

An organic silicon polymer, polysiloxane (R1 and R2 in formula (3) are -H and -CH = $CH_2$ group, respectively, liquid under room temperature) was baked for 3 hours in a nitrogen atmosphere of 850°C, until carbon atoms included in the polysiloxane were carbonized, thereby producing an amorphous material B2. The composition of the amorphous material B2 was measured with TEM-EDX, and it was determined to be $SiO_xN_yC_z$(x = 0.82, y = 0, z = 1.21).

<Comparative Example 3>

An organic silicon polymer, polysilazane (R1 and R2 in formula (4) are -$CH_3$ and -CH = $CH_2$ group, respectively, liquid under room temperature) was baked for 3 hours in a nitrogen atmosphere of 850°C until carbon atoms included in the polysilazane were carbonized, thereby producing an amorphous material B3. The composition of the amorphous material B3 was measured with TEM-EDX, and it was determined to be $SiO_xN_yC_z$(x = 1.4, y = 0.2, z = 2.6).

<Example 1>

For the material composing the active phase, silicon nanoparticles with an average particle size of 40 nm were prepared. To 200 parts by mass of the polycarbosilane used in Comparative Example 1, 100 parts by mass of the nanoparticles were mixed until a homogeneous slurry was formed, thereby producing a mixture. The produced mixture was baked under the same conditions as those in Comparative Example 1, thereby producing a composite material A1. The composite material A1 had a nanoparticle (active phase) content of about 45 mass%.

The composite material A1 was subjected to a fracture strength measurement with the method described above, and the fracture strength when the particle size was 6 um was 375 MPa, and the fracture strength when the particle size was 12 um was 226 MPa. At least a portion of a surface of the composite material A1 was covered with a carbonaceous

conductive film.

<Example 2>

The same nanoparticles as the silicon nanoparticles in Example 1 were prepared, and 100 parts by mass of the nanoparticles relative to 220 parts by mass of the polysiloxane used in Comparative Example 2 were mixed until a homogeneous slurry is formed, thereby producing a mixture. The produced mixture was baked under the same conditions as those in Comparative Example 2, thereby producing a composite material A2. The composite material A2 had a nanoparticle (active phase) content of about 45 mass%.

The composite material A2 was subjected to a fracture strength measurement with the method described above, and the fracture strength when the particle size was 6 um was 335 MPa, and the fracture strength when the particle size was 12 um was 210 MPa.

At least a portion of a surface of the composite material A2 was covered with a carbonaceous conductive film in the same manner as in Example 1.

[Evaluation]

<TEM-EDX>

FIG. 2 shows a cross sectional TEM image around the interface between the composite material A1 and the conductive film. In the cross sectional TEM image, a sea portion of the amorphous material phase, and an island portion of the active phase (nano Si) dispersed in the sea portion are observed. The composite material A1 clearly had a sea-island structure. No grain boundary was observed in the amorphous material phase at all, and no void was observed: the structure was dense.

EELS analysis was performed for (1) island portion (inside of the nano Si), (2) boundary between the island portion and the sea portion, and (3) sea portion of the above-described cross sectional TEM image. FIG. 3 shows an EELS spectrum. FIG. 3 shows that the oxidation of the nanoparticles was not progressing, and the interface had no void.

<XPS>

Then, the composite material A1 was subjected to XPS analysis. FIG. 4 shows a C1s spectrum. Several types of C1s peaks attributed to the Si-C bond, the Si-O-C bond, the C-O bond, and the C-C bond are observed in the C1s spectrum.

In the composite material A1, the ratio of a peak area attributed to the C-C bond Sx relative to a total area of all C1s peaks St was 6.8%. The peak area attributed to the C-Si bond Sy relative to the total area St was 80.5%, and the peak area attributed to the C-O-Si bond Sz relative to the total area St was 8.4%.

The composite material A2 was subjected to XPS analysis in the same manner as above, and the ratio of the peak area Sx relative to the total area St was 9.7%. The peak area attributed to the C-Si bond Sy relative to the total area St was 12.6%, and the ratio of the peak area attributed to the C-O-Si bond Sz relative to the total area St was 66.8%.

<Test cell capacity>

Cells including the amorphous materials B1 to B3 of Comparative Examples 1 to 3, and the composite materials A1 to A2 of Examples 1 to 2 as the active material were assembled.

(1) Working electrode (Negative Electrode)

A negative electrode mixture was prepared by mixing an active material (AM) composed of the amorphous materials B1 to B3 or the composite materials A1 to A2, carbon nanotube (CNT) as a conductive assistant, polyacrylic acid (PAA) and a styrene-butadiene copolymer rubber (SBR) as binders, and carboxymethyl cellulose (CMC) as a thickener. The mass ratio of the materials in the negative electrode mixture was AM: CNT: PAA: CMC: SBR = 100:0.5:5:5:5. The negative electrode mixture was formed into a disk shape with a diameter of 12 mm, thereby producing a coin type negative electrode.

(2) Counter electrode

A lithium metal foil was attached to one side of the electrolytic copper foil (current collector), and punched out with a diameter of 15 mm, thereby producing a counter electrode.

(3) Electrolyte preparation

An electrolyte was prepared by dissolving $LiPF_6$ in a solvent mixture of fluoroethylene carbonate (FEC) and dimethyl carbonate (DMC) (volume ratio 1:4) at a concentration of 1 mol/L.

(4) Cell production

An electrode body was composed by placing the above-described negative electrode to face the counter electrode with a separator interposed therebetween, and the electrode body was accommodated in a coin-shaped outer can. After injecting the electrolyte into the outer can, the outer can was sealed, thereby completing a coin type cell with a designed capacity of 5 mAh.

(5) Charge and discharge test

In a thermostatic chamber of 25°C, the negative electrode was charged with lithium over 2 hours at a constant current of 0.05 C (1 C is a current value at which the designed capacity is discharged by an hour), and then the negative electrode was allowed to stand for 12 hours. The negative electrode was then charged further to a cell voltage of 0.01 V at a constant current of 0.05 C, and allowed to stand for 20 minutes. The lithium was then discharged from the negative electrode to a cell voltage of 1.5 V at a constant current of 0.05 C, and the discharge capacity was determined. Table 1 shows the results.

[Table 1]

| Active Material | Discharge Capacity(mAh/g) |
|---|---|
| Amorphous Material B1 | Nonactive |
| Amorphous Material B2 | 500 |
| Amorphous Material B3 | 450 |
| Composite Material A1 | 730 |
| Composite Material A2 | 920 |

Table 1 shows that the composite materials are useful for the negative electrode active material that exhibits a high capacity.

[Industrial Applicability]

The negative electrode active material for a secondary battery of the present invention is useful for a negative electrode for a secondary battery (particularly nonaqueous electrolyte secondary battery) used for a main power source for mobile communication devices, mobile electronic devices, etc.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1a: positive electrode mixture layer, 1b: positive electrode current collector, 1c: positive electrode tab-lead, 2a: negative electrode mixture layer, 2b: negative electrode current collector, 2c: negative electrode tab-lead, 4: electrode group, 5: outer case, 6: insulating tab film, 10: positive electrode, 20: negative electrode, 30: separator, 100: secondary battery

## Claims

**1.** A negative electrode active material for a secondary battery comprising: a composite material including an active

phase that reacts with Li and an amorphous material phase, wherein

the active phase is dispersed in the amorphous material phase, and
the amorphous material phase includes Si, O, and C.

**2.** The negative electrode active material for a secondary battery of claim 1, wherein in a cross section of the composite material, the amorphous material phase does not have a substantial grain boundary.

**3.** The negative electrode active material for a secondary battery of claim 1 or 2, wherein the amorphous material phase is represented by a general formula: $Li_aSiO_xN_yC_z$, and

$$0 \leq a \leq 2$$

$$0.1 \leq x \leq 1.5$$

$$0 \leq y \leq 0.5,$$

and

$$0 < 1\text{-}0.5x\text{-}0.75y < z \leq 6$$

are satisfied.

**4.** The negative electrode active material for a secondary battery of any one of claims 1 to 3, wherein in a C1s spectrum obtained by X-ray photoelectron spectroscopy (XPS) of the composite material, a ratio of a peak area attributed to a C-C bond Sx relative to a total area of all C1s peaks St is 2% or more and 90% or less.

**5.** The negative electrode active material for a secondary battery of claim 4, wherein the ratio of the peak area Sx relative to the total area St is 2% or more and 20% or less.

**6.** The negative electrode active material for a secondary battery of claim 4 or 5, wherein a ratio of a total of a peak area attributed to a C-Si bond Sy and a peak area attributed to a C-O-Si bond Sz relative to the total area St is 50% or more.

**7.** The negative electrode active material for a secondary battery of any one of claims 1 to 6, wherein a peak area Sv of 9 ppm or more and 30 ppm or less in a spectrum obtained by a 13C-NMR measurement on the composite material is 10% or more and 90% or less of an area of an entire spectrum.

**8.** The negative electrode active material for a secondary battery of any one of claims 1 to 7, wherein particles of the composite material have a fracture strength of 600 MPa or less when the particles have a particle size of 6 um.

**9.** The negative electrode active material for a secondary battery of claim 8, wherein the particles of the composite material have a fracture strength of 500 MPa or less when the particles have a particle size of 12 um.

**10.** The negative electrode active material for a secondary battery of any one of claims 1 to 9, wherein a material composing the active phase includes at least one selected from the group consisting of a metal and an intermetallic compound.

**11.** The negative electrode active material for a secondary battery of claim 10, wherein the metal is at least one selected from the group consisting of Si, Sn, Ti, Al, and Mg, and
the intermetallic compound is at least one selected from the group consisting of $CrSi_2$, $MnSi_2$, $FeSi_2$, $CoSi_2$, $NiSi_2$, and LiNiSn.

**12.** The negative electrode active material for a secondary battery of any one of claims 1 to 11, wherein a mass ratio

of the active phase in the composite material is 20 mass% or more and 95 mass% or less.

**13.** The negative electrode active material for a secondary battery of claim 12, wherein the mass ratio of the active phase in the composite material is 35 mass% or more and 75 mass% or less.

**14.** The negative electrode active material for a secondary battery of any one of claims 1 to 13, wherein the active phase is particulate, and
an average particle size of the active phase is 1 nm or more and 1000 nm or less.

**15.** The negative electrode active material for a secondary battery of any one of claims 1 to 14, further comprising at least one selected from the group consisting of natural graphite, artificial graphite, hard carbon, and soft carbon.

**16.** A method for producing a negative electrode active material for a secondary battery, the method including:

producing a mixture including a first polymer of an organic silicon polymer including Si, O, and C, and a material composing an active phase that reacts with Li, and
baking the mixture to produce a composite material including the active phase and an amorphous material phase including Si, O, and C, wherein the active phase is dispersed in the amorphous material phase.

**17.** The method for producing a negative electrode active material for a secondary battery of claim 16, wherein the first polymer is at least one selected from the group consisting of polysiloxane, polycarbosilane, polysilazane, a silicone resin, and a silicone oil.

**18.** The method for producing a negative electrode active material for a secondary battery of claim 16 or 17, wherein in the step of producing a mixture, a second polymer that should be carbonized along with a carbon atom in the first polymer when baking the mixture is included in the mixture.

**19.** The method for producing a negative electrode active material for a secondary battery of claim 18, wherein the second polymer is at least one selected from the group consisting of a polyvinyl resin, a polyimide resin, polyacrylonitrile, an acrylic resin, and a polyolefin resin.

**20.** A secondary battery comprising: a positive electrode, a negative electrode, a separator interposed between the positive electrode and the negative electrode, and an electrolyte, wherein
the negative electrode includes the negative electrode active material for a secondary battery of claim 1.

FIG. 1A

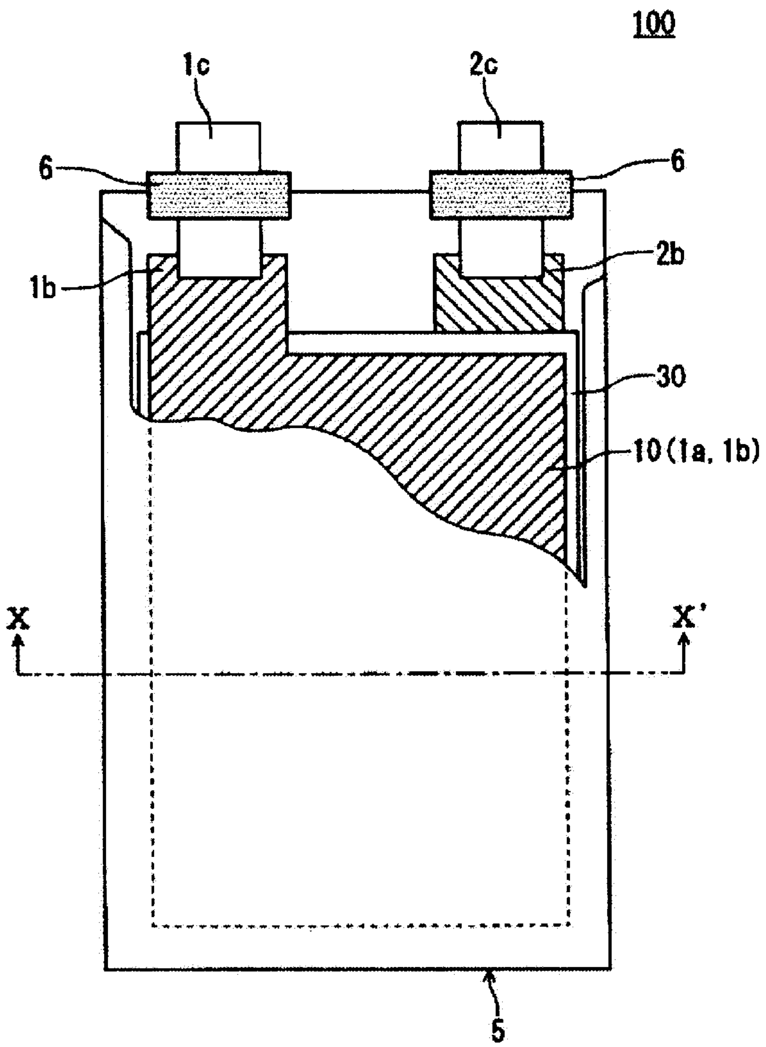

FIG. 1B

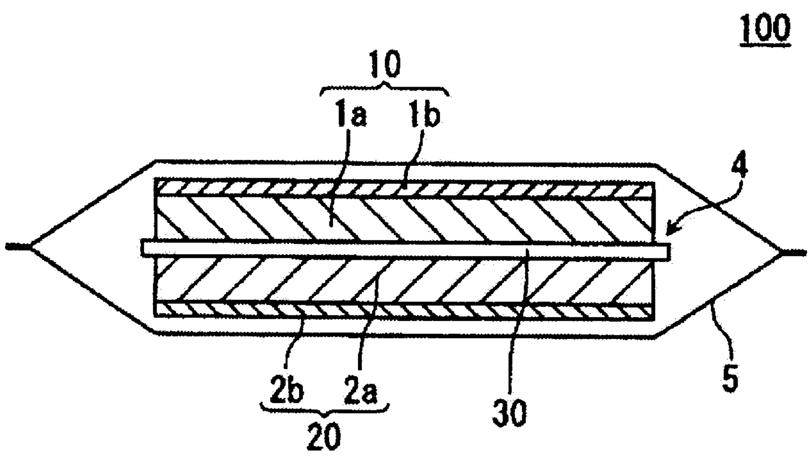

FIG. 2

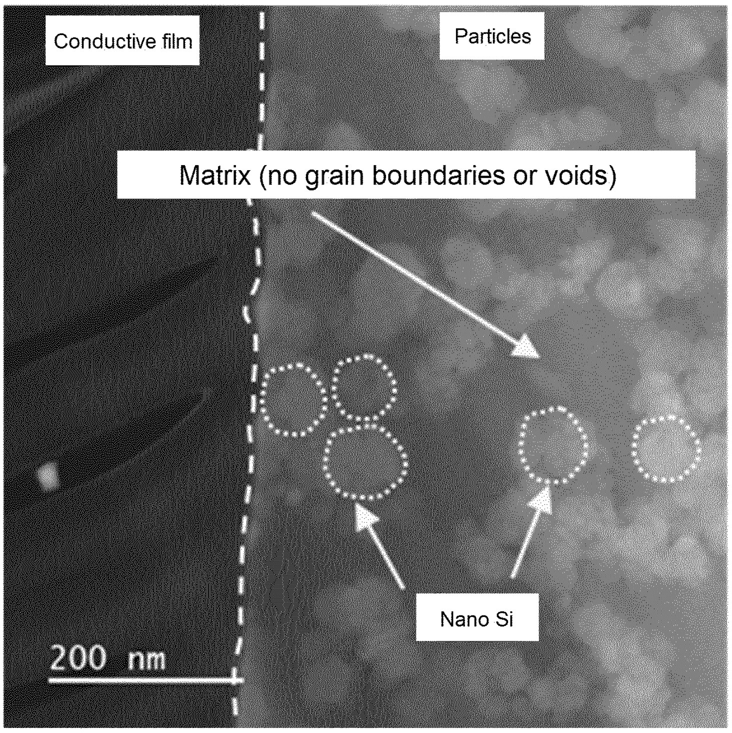
Conductive film
Particles
Matrix (no grain boundaries or voids)
Nano Si
200 nm

FIG. 3

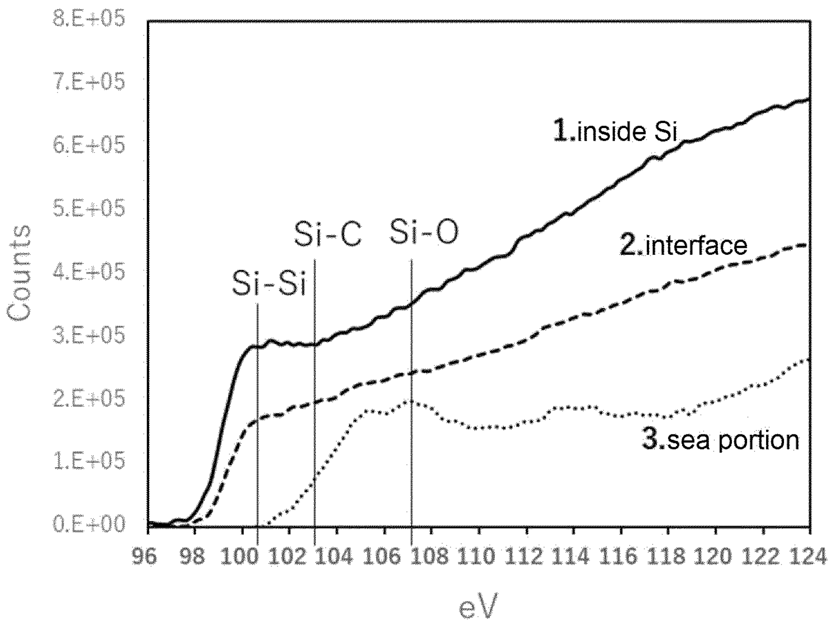
Counts
8.E+05
7.E+05
6.E+05
5.E+05
4.E+05
3.E+05
2.E+05
1.E+05
0.E+00
Si-Si
Si-C
Si-O
1.inside Si
2.interface
3.sea portion
96 98 100 102 104 106 108 110 112 114 116 118 120 122 124
eV

*FIG. 4*

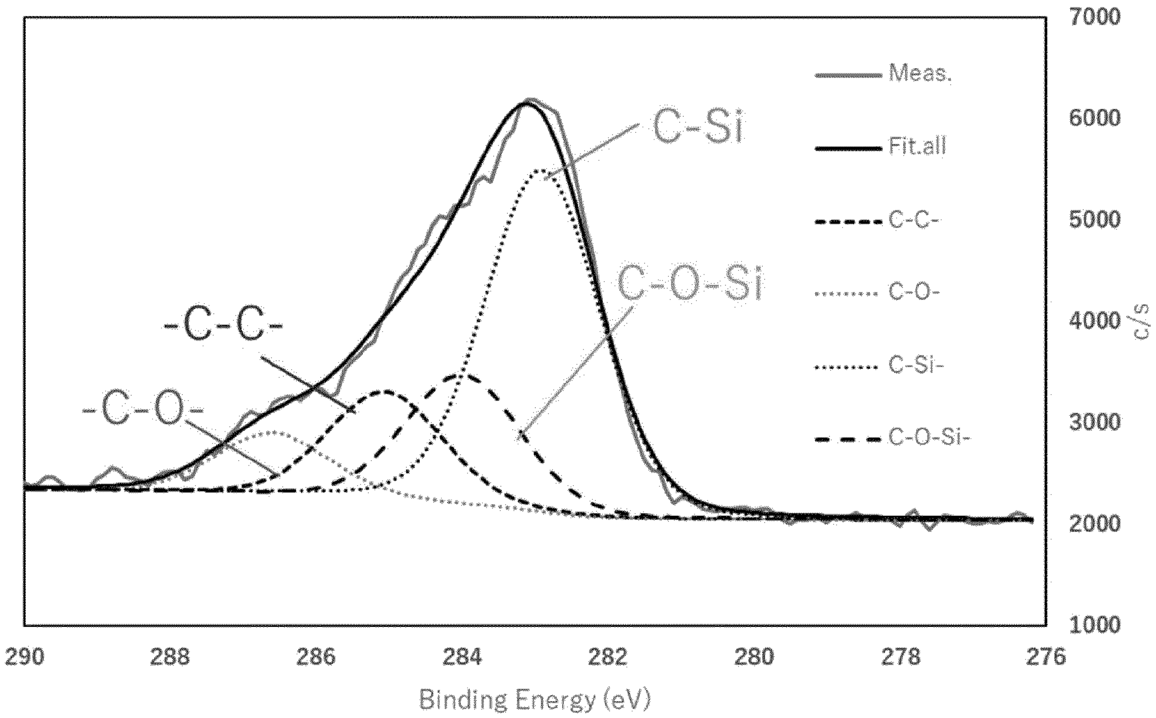
Meas.
Fit.all
C-C-
C-O-
C-Si-
C-O-Si-
C-Si
C-O-Si
-C-C-
-C-O-
7000
6000
5000
4000
3000
2000
1000
c/s
290
288
286
284
282
280
278
276
Binding Energy (eV)

## INTERNATIONAL SEARCH REPORT

International application No.
**PCT/JP2022/014922**

**A. CLASSIFICATION OF SUBJECT MATTER**

***C01B 33/00***(2006.01)i; ***C01B 33/02***(2006.01)i; ***H01M 4/36***(2006.01)i; ***H01M 4/587***(2010.01)i; ***H01M 4/62***(2006.01)i
FI: H01M4/36; H01M4/587; H01M4/36 E; H01M4/62 Z; C01B33/00; C01B33/02 Z

According to International Patent Classification (IPC) or to both national classification and IPC

**B. FIELDS SEARCHED**

Minimum documentation searched (classification system followed by classification symbols)

C01B33/00; C01B33/02; H01M4/36; H01M4/587; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2009-0107789 A (LG CHEM. LTD.) 14 October 2009 (2009-10-14) paragraphs [0004], [0005], [0014], [0020], [0025]-[0027] | 1-2, 10-13, 15-17, 20 |
| X | JP 2015-125826 A (SHIN-ETSU CHEMICAL CO., LTD.) 06 July 2015 (2015-07-06) paragraphs [0030], [0040], [0076] | 1-2, 10-11, 14-16, 20 |
| X | JP 2014-107013 A (DOW CORNING TORAY CO., LTD.) 09 June 2014 (2014-06-09) paragraphs [0011], [0062]-[0064], [0094], [0095], [0114] | 1-2, 10-16, 18, 20 |
| A | JP 2015-222733 A (DIC CORP.) 10 December 2015 (2015-12-10) | 1-20 |
| A | JP 2007-115548 A (HOKKAIDO UNIVERSITY) 10 May 2007 (2007-05-10) | 1-20 |
| A | JP 2018-106830 A (DIC CORP.) 05 July 2018 (2018-07-05) | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/014922**

| Patent document cited in search report | Publication date (day/month/year) | Patent family member(s) | Publication date (day/month/year) |
|---|---|---|---|
| KR 10-2009-0107789 A | 14 October 2009 | (Family: none) | |
| JP 2015-125826 A | 06 July 2015 | US 2016/0322637 A1<br>paragraphs [0036], [0056], [0108]<br>WO 2015/097990 A1<br>EP 3089245 A1<br>EP 3480875 A1<br>KR 10-2016-0101932 A<br>CN 105849953 A | |
| JP 2014-107013 A | 09 June 2014 | (Family: none) | |
| JP 2015-222733 A | 10 December 2015 | US 2015/0340695 A1<br>US 2018/0053937 A1<br>WO 2014/098070 A1<br>TW 201444156 A<br>CN 104885264 A<br>KR 10-2015-0098610 A<br>KR 10-2020-0136513 A | |
| JP 2007-115548 A | 10 May 2007 | (Family: none) | |
| JP 2018-106830 A | 05 July 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015018788 A
- JP 2007115548 A
- JP 2011233245 A